# EUROPÄISCHE PATENTSCHRIFT

(11) **EP 0 800 954 B1**
(45) Veröffentlichungstag und Bekanntmachung des Hinweises auf die Patenterteilung: **18.04.2001**
(21) Anmeldenummer: 97102636.4
(22) Anmeldetag: 19.02.1997
(51) Int. Cl.: B60N 3/10

(54) **Halter für einen Getränkebehälter**
Holder for beverage containers
Support pour récipients de boisson

(30) Priorität: 11.04.1996 DE 29606583 U
(43) Veröffentlichungstag der Anmeldung: 15.10.1997
(73) Patentinhaber: fischerwerke Artur Fischer GmbH & Co. KG, 72178 Waldachtal (DE); Bayerische Motoren Werke Aktiengesellschaft, 80788 München (DE)
(72) Erfinder: Bieck, Torsten, Dipl.-Ing. TH, 72178 Waldachtal (DE); Ziegler, Christiane, Dipl.-Ing.FH, 72178 Waldachtal (DE); Widulle, Rüdiger, Dipl.-Ing.FH, 81547 München (DE); Lange, Carsten, 85283 Wolnzach (DE)

(56) Entgegenhaltungen:
- US-A- 3 129 569
- US-A- 3 491 976
- US-A- 5 054 733
- US-A- 5 071 096
- US-A- 5 154 380
- US-A- 5 445 350

## Beschreibung

Die Erfindung betrifft einen Halter für einen Getränkebehälter, der zum Einbau in ein Fahrzeug vorgesehen ist mit den Merkmalen des Oberbegriffs des Anspruchs 1, wie er aus der Druckschrift US-A-5 154 380 bekannt ist.

Es ist eine Vielzahl derartiger Halter mit einer beispielsweise topfförmigen Behälteraufnahme für Tassen, Becher, Getränkedosen usw. bekannt. Die bekannten Halter weisen vorzugsweise mehrere, über den Umfang verteilt angeordnete Haltebacken auf, die von einem Federelement in die Behälteraufnahme hineingedrückt werden und an einer Umfangsfläche des eingestellten Getränkebehälters anliegen, um diesem Halt in der Behälteraufnahme zu geben. Die bekannten Halter eignen sich jedoch für nur Getränkebehälter eines bestimmten Durchmessers.

Es ist daher Aufgabe der Erfindung, einen Halter der eingangs genannten Art so auszubilden, daß er Getränkebehältern mit verschiedenen Durchmessern sicheren Halt gibt.

Diese Aufgabe wird durch einen Halter mit den Merkmalen des Anspruchs 1 gelöst.

Erfindungsgemäß weist der Halter Haltebacken mit mehreren Spannflächen auf, die unterschiedlich weit in die Behälteraufnahme hineinragen. Dadurch ist gewährleistet, daß die Haltebacken mit den entsprechenden Spannflächen auch an Getränkebehältern kleinen Durchmessers anliegen. Weiterer Vorteil ist, daß die Federkraft, mit der die Haltebacken gegen den Getränkebehälter drücken, nur wenig vom Durchmesser des Getränkebehälters abhängt und bei Getränkebehältern mit großem und mit kleinem Durchmesser näherungsweise gleich groß ist. Des weiteren sind die Haltebacken erfindungsgemäß mit einem Schwenk- und Linearlager beispielsweise an ihren beiden Enden am Halter angebracht. Die Schwenk- und Linearlager ermöglichen eine Schwenk- und Verschiebebewegung der Haltebacken aus der Behälteraufnahme heraus, so daß die Haltebacken beim Einstellen eines Getränkebehälters in die Behälteraufnahme mit dem Getränkebehälter gegen die Kraft des Federelementes auf seinen Durchmesser auseinandergedrückt werden können. Diese Lagerung bietet große Anpassungsmöglichkeiten der Haltebacken auf den jeweils eingestellten Getränkebehälter.

Vorzugsweise findet ein Federelement in Form eines offenen oder geschlossenen Kreisrings oder ein Band Verwendung, das die Behälteraufnahme umgreift und an den Haltebacken angreift und diese in die Behälteraufnahme hineindrückt. Vorzugsweise besteht das Federelement aus Elastomerkunststoff.

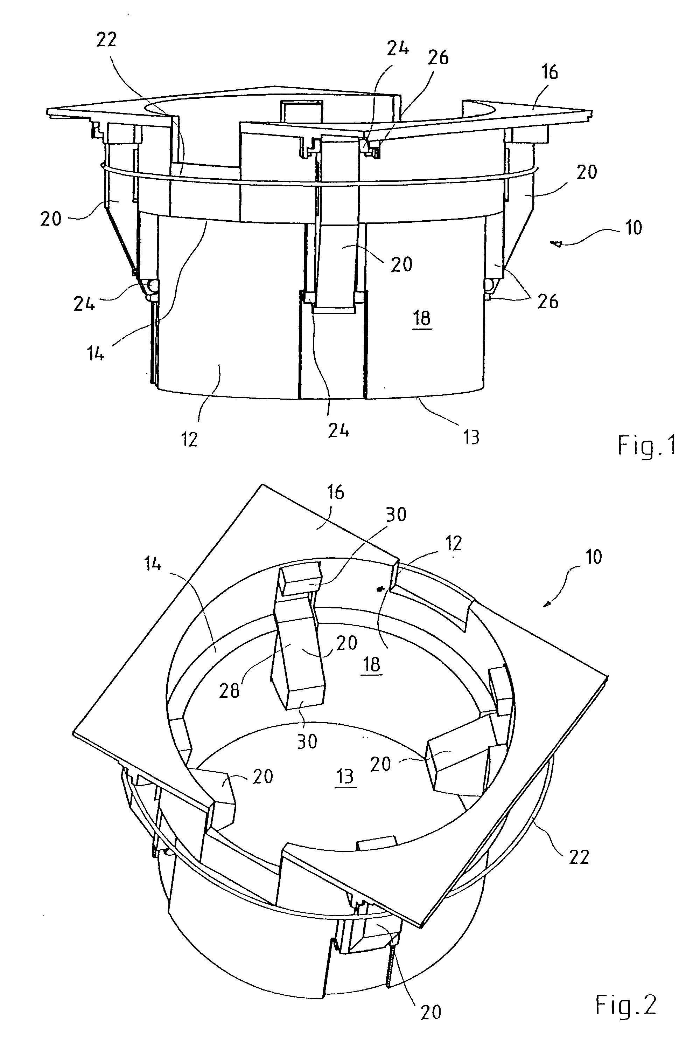

Die Erfindung wird nachfolgend anhand eines in der Zeichnung dargestellten Ausführungsbeispiels näher erläutert. Die beiden Figuren zeigen einen erfindungsgemäßen Halter in perspektivischer Darstellung aus zwei unterschiedlichen Blickrichtungen.

Der in der Zeichnung dargestellte, erfindungsgemäße Halter 10 zum Einstellen eines nicht dargestellten Getränkebehälters wie einer Tasse, eines Bechers oder einer Getränkedose, ist zum Einbau in ein Kraftfahrzeug vorgesehen. Er weist eine topfförmige Behälteraufnahme 12 mit Boden 13 auf. Die Behälteraufnahme 12 verjüngt sich an einer Ringstufe 14 und stellt dadurch zwei Durchmesser für verschiedene Getränkebehälter zur Verfügung. An einer offenen Oberseite der Behälteraufnahme 12 geht der Halter 10 einstückig in eine rechteckige, flanschartige Blende 16 über, die zum Verschließen einer Einbauöffnung für den Halter 10 im Kraftfahrzeug vorgesehen ist.

In Öffnungen einer Umfangswand 18 der Behälteraufnahme 12 sind vier Haltebacken 20 über den Umfang verteilt angeordnet. Die Haltebacken 20 werden von einem gemeinsamen Federring 22 aus einem Elastomerkunststoff in radialer Richtung in die Behälteraufnahme 12 hineingedrückt. Der Federring 22 läuft außen um die Behälteraufnahme 12 herum und greift von außen an den Haltebacken 20 an.

Die Haltebacken 20 weisen an oberen und unteren Enden seitlich abstehende Zapfen 24 auf, die in radial zur Behälteraufnahme 12 verlaufende, nach außen offene Führungen 26 außen an der Umfangswand 18 der Behälteraufnahme 12 eingreifen. Die Zapfen 24 und die Führungen 26 bilden Schwenk- und Linearlager, die eine Schwenkbewegung der Haltebacken 20 um die Zapfen 24 und eine Linearbewegung von der Behälteraufnahme 12 nach außen ermöglichen. Die Zapfen 24 werden vom Federring 22, der die Haltebacken 20 nach innen drückt, in Eingriff in den Führungen 26 gehalten. Die Schwenk- und Linearlager 24, 26 ermöglichen eine selbsttätige Einstellung der Haltebacken 20 auf den Durchmesser eines in die Behälteraufnahme 12 des erfindungsgemäßen Halters 10 eingestellten Getränkebehälters.

Die Haltebacken 20 weisen eine nach oben weisende Schrägfläche 28 auf, an der ein Getränkebehälter beim Einstellen in die Behälteraufnahme 12 entlang gleitet und die Haltebacken 20 dabei radial nach außen drückt, bis sie am Umfang des Getränkebehälters anliegen.

Jede der Haltebacken 20 weist zwei Halteflächen 30 auf. Diese befinden sich in etwa in Sekantenebenen der Behälteraufnahme 12 und sind zur Anlage am Umfang eines eingestellten Getränkebehälters vorgesehen. Die Halteflächen 30 befinden sich auf verschiedenen Radien, sie sind für verschiedene Getränkebehälter unterschiedlicher Durchmesser vorgesehen.

## Patentansprüche

1. Halter für einen Getränkebehälter, mit einer Behälteraufnahme für den Getränkebehälter und mit mindestens einer Haltebacke, die von einem Federelement in die Behälteraufnahme gedrückt wird, **dadurch gekennzeichnet**, daß die Haltebacke (20) Halteflächen (30) mit unterschiedlichen radialen Abständen zu einer Mitte der Behälteraufnahme (12) aufweist, und daß die Haltebacke (20) mit einem Schwenk- und Linearlager (24, 26) am Halter (10) angebracht ist.

2. Halter nach Anspruch 1, **dadurch gekennzeichnet**, daß das Federelement (22) ein offener oder geschlossener Kreisring oder ein Band ist, der/das die Behälteraufnahme (12) umgreift.

3. Halter nach Anspruch 2, **dadurch gekennzeichnet**, daß das Federelement (22) aus einem Elastomerkunststoff besteht.

## Claims

1. Holder for a drinks container, which holder has a container receptacle for the drinks container and at least one holding jaw that is pressed onto the container receptacle by a spring element, **characterized in that** the holding jaw (20) has supporting surfaces (30) at different radial distances from a centre of the container receptacle (12), and the holding jaw (20) is attached to the holder (10) by a pivoting and linear bearing (24, 26).

2. Holder according to claim 1, **characterized in that** the spring element (22) is an open or closed circular ring or a band that engages around the container receptacle (12).

3. Holder according to claim 2, **characterized in that** the spring element (22) is made of a synthetic elastomer material.

## Revendications

1. Support pour un récipient à boisson, comprenant un réceptacle pour récipient, destiné à recevoir le récipient à boisson, et au moins une mâchoire de retenue, qui est poussée à l'intérieur du réceptacle pour récipient par un élément extensible, caractérisé en ce que la mâchoire de retenue (20) est munie de surfaces de blocage (30) situées à différentes distances radiales par rapport à un centre du réceptacle pour récipient (12), et en ce que la mâchoire de retenue (20) est montée contre le support (10) au moyen d'un palier de pivotement et de déplacement linéaire (24, 26).

2. Support selon la revendication 1, caractérisé en ce que l'élément extensible (22) est un anneau circulaire ouvert ou fermé ou une bande, qui entoure le réceptacle pour récipient (12).

3. Support selon la revendication 2, caractérisé en ce que l'élément extensible (22) est réalisé dans une matière élastomère.
